# EUROPEAN PATENT APPLICATION

(11) **EP 4 733 446 A1**
(43) Date of publication of application: **29.04.2026**
(21) Application number: 24824679.5
(22) Date of filing: 14.06.2024
(51) Int. Cl.: C25B 11/052, C25B 1/04, C25B 9/00, C25B 11/091, C25B 13/08

(54) **ELECTRODE FOR WATER ELECTROLYSIS, ANODE FOR WATER ELECTROLYSIS, CATHODE FOR WATER ELECTROLYSIS, WATER ELECTROLYSIS CELL, AND WATER ELECTROLYSIS DEVICE**

(30) Priority: 23.06.2023 JP 2023103749
(71) Applicant: Panasonic Intellectual Property Management Co., Ltd., Kadoma-shi, Osaka 571-0057 (JP)
(72) Inventor: SAWADA, Koichi, Kadoma-shi, Osaka 571-0057 (JP); HAYASHI, Takao, Kadoma-shi, Osaka 571-0057 (JP); MURASE, Hideaki, Kadoma-shi, Osaka 571-0057 (JP)
(74) Representative: Grünecker Patent- und Rechtsanwälte PartG mbB
(86) International application number: PCT/JP2024/021771
(87) International publication number: WO 2024/262443

(57) **Abstract**

A water electrolysis electrode 1 includes an electroconductive substrate 10 and a layered double hydroxide layer 20. The layered double hydroxide layer 20 is disposed on a surface of the electroconductive substrate 10. The layered double hydroxide layer 20 includes a roughness layer 20r. In the layered double hydroxide layer 20, the proportion Pₜᵣ of the thickness t₂₀ᵣ of the roughness layer 20r to the thickness t₂₀ of the layered double hydroxide layer 20 is 4.8% or more.

## Description

### TECHNICAL FIELD

The present disclosure relates to a water electrolysis electrode, a water electrolysis anode, a water electrolysis cathode, a water electrolysis cell, and a water electrolysis device.

### BACKGROUND ART

Water electrolysis electrodes have been known.

Patent Literature 1 describes a method for manufacturing a water electrolysis electrode, and the method includes a step of immersing an electrode substrate in an organic solvent, where the electrode substrate includes a predetermined layered double hydroxide. In this manufacturing method, the electrode substrate is manufactured by performing an electrodeposition process in an aqueous solution containing a compound including a metal M1 and a compound including a metal M2, by use of an electroconductive substrate as an anode.

Patent Literature 2 describes an oxygen evolution catalyst including an oxidized graphene layer and a nickel-iron layered double hydroxide layer supported on a surface of the oxidized graphene layer, wherein the average thickness of the oxidized graphene layer is 0.33 to 4 nm.

In Non Patent Literature 1, activity of oxygen evolution reaction (OER) of a Ni-Fe layered double hydroxide (Ni-Fe LDH) electrode is examined.

In Non Patent Literature 2, it is described that the local electronic structure of Ni-Fe LDH is adjusted by an interfacial interaction between FeOOH and the Ni-Fe LDH, which enhances the OER electrode-catalytic activity.

### CITATION LIST

### Patent Literature

Patent Literature 1: WO 2017-154134 A1
Patent Literature 2: JP 2018-043193 A

### Non Patent Literature

Non Patent Literature 1: Seyeong Lee et al, "Operational durability of three-dimensional Ni-Fe layered double hydroxide electrocatalyst for water oxidation," Electrochimica Acta, 2019, Vol. 315, p. 94-101
Non Patent Literature 2: Jiande Chen et al, "Interfacial Interaction between FeOOH and Ni-Fe LDH to Modulate the Local Electronic Structure for Enhanced OER Electrocatalysis," ACS Catalysis, 2018, Vol. 8, p. 11342-11351

### SUMMARY OF INVENTION

### Technical Problem

The descriptions in the above literatures need to be reconsidered from the viewpoint of improvement of performance of water electrolysis electrodes. Therefore, the present disclosure provides a novel water electrolysis electrode advantageous from the viewpoint of exhibiting high performance.

### Solution to Problem

The present disclosure provides a water electrolysis electrode, including:
an electroconductive substrate; and
a layered double hydroxide layer disposed on a surface of the electroconductive substrate, wherein
the layered double hydroxide layer include a roughness layer, and
a proportion of a thickness of the roughness layer to a thickness of the layered double hydroxide layer is 4.8% or more.

### Advantageous Effects of Invention

According to the present disclosure, it is possible to provide a novel water electrolysis electrode advantageous from the viewpoint of exhibiting high performance.

### BRIEF DESCRIPTION OF DRAWINGS

FIG. 1 is a cross-sectional view showing an example of a water electrolysis electrode of the present disclosure.
FIG. 2 is a cross-sectional view schematically showing an example of an optical model of a water electrolysis electrode obtained by spectroscopic ellipsometry.
FIG. 3 is a diagram schematically showing an example of a crystal structure of a layered double hydroxide (LDH).
FIG. 4 is a diagram schematically showing an example of mechanism in manufacture of a water electrolysis electrode.
FIG. 5 is a cross-sectional view schematically showing an example of a water electrolysis cell of the present disclosure.
FIG. 6 is a cross-sectional view schematically showing an example of a water electrolysis device of the present disclosure.
FIG. 7 is a cross-sectional view schematically showing another example of a water electrolysis cell of the present disclosure.
FIG. 8 is a cross-sectional view schematically showing another example of a water electrolysis device of the present disclosure.

### DESCRIPTION OF EMBODIMENTS

### (Findings on which the present disclosure is based)

Use of renewable energy sources such as solar power and wind power has been attracting attention as a measure against global warming. Power generation using renewable energy sources may lead to a problem of surplus electricity being wasted. For this reason, the efficiency of renewable energy use is not necessarily sufficient. Therefore, methods of making effective use of surplus electricity by producing and storing hydrogen using surplus electricity are being considered.

Electrolysis of water is a possible method for producing hydrogen using surplus electricity. In order to produce hydrogen affordably and stably, there is a demand for development of a highly efficient, long-life water electrolysis device. In a water electrolysis device, oxygen is evolved at the anode, and hydrogen is evolved at the cathode. The reaction in which the oxygen is evolved at the anode is also called an anodic reaction, and the reaction in which the hydrogen is evolved at the cathode is also called a cathodic reaction. To provide a highly efficient water electrolysis device, in particular, in the case where a predetermined voltage is applied between the anode and the cathode, it is desirable that a current density per unit electrode area at the anode is greater. In addition, in this case, it is desirable that a current density per unit electrode area at the cathode is greater. Therefore, development of high-performance electrodes for the anodic reaction or the cathodic reaction in water electrolysis is anticipated.

For example, an LDH is considered to be a promising material for water electrolysis electrodes from the viewpoint of its large specific surface area and various combinations of metal ions. For example, according to Patent Literature 1, an electrode substrate including a predetermined layered double hydroxide is manufactured by electrodeposition in an aqueous solution containing a compound including a metal M1 and a compound including a metal M2, using an electroconductive substrate as an anode. On the other hand, the performance of electrodes manufactured by the electrodeposition was insufficient, leaving room for improvement. Through intensive researches, the present inventors have newly discovered that the performance of a water electrolysis electrode is enhanced by forming a LDH-containing catalyst layer such that the layer includes a predetermined roughness layer, thereby completing the water electrolysis electrode of the present disclosure.

Embodiments of the present disclosure are described below with reference to the attached drawings. The present disclosure is not limited to the following embodiments. The embodiments described below are all intended to provide comprehensive or specific examples. Therefore, the numerical values, the shapes, the materials, the components, the arrangement or the positions of the components, the connection forms or the like shown in the following embodiments are simply intended to demonstrate examples, but are not intended to limit the present disclosure. Among the components in the following embodiments, the components that are not described in the independent claims indicating the broadest concept are described as optional components. Descriptions of components with the same reference numerals in the drawings may be omitted. The drawings show each component schematically to facilitate understanding, so that the shapes, the dimensional ratios and the like may not be accurately depicted.

### (First embodiment)

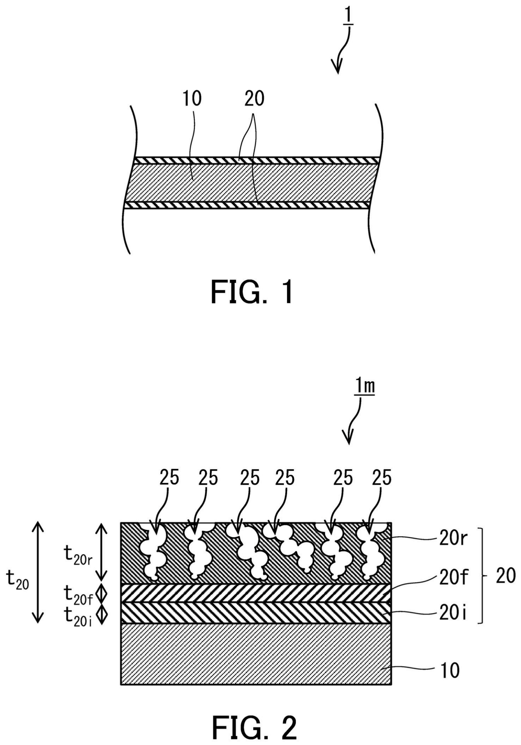

FIG. 1 is a cross-sectional view schematically showing a water electrolysis electrode according to a first embodiment. FIG. 2 is a cross-sectional view schematically showing an example of an optical model of an electrode for water electrolysis obtained by spectroscopic ellipsometry. As shown in FIG. 1, a water electrolysis electrode 1 includes an electroconductive substrate 10 and a layered double hydroxide (LDH) layer 20. The LDH layer 20 is disposed on a surface of the electroconductive substrate 10. The LDH layer 20 can function as a catalyst for an anodic reaction or a cathodic reaction in water electrolysis. As shown in FIG. 2, the LDH layer 20 includes a roughness layer 20r. In the LDH layer 20, a proportion Pₜᵣ of the thickness t₂₀ᵣ of the roughness layer 20r to the thickness t₂₀ of the LDH layer 20 is 4.8% or more. With this configuration, when a predetermined voltage is applied between the anode and cathode during water electrolysis, the current density per unit electrode area at the anode or the cathode is likely to increase, enabling the water electrolysis electrode 1 to exhibit high performance.

The thickness t₂₀ and the thickness t₂₀ᵣ are determined, for example, by spectroscopic ellipsometry. As shown in FIG. 2, in an optical model 1m, the LDH layer 20 includes an interface layer 20i, a dense layer 20f, and a roughness layer 20r, in order of proximity to the electroconductive substrate 10 in the thickness direction. The interface layer 20i is formed of the material of the electroconductive substrate 10 and the LDH included in the LDH layer 20. The dense layer 20f is formed solely of the LDH included in the LDH layer 20. The roughness layer 20r is a surface roughness layer formed of air potentially present in voids 25 and the LDH included in the LDH layer 20. A volume ratio of the material of the electroconductive substrate 10 and the LDH in the interface layer 20i can be a predetermined ratio. A volume ratio of the LDH and air in the roughness layer 20r may be a predetermined ratio. Based on measurement data obtained by a spectroscopic ellipsometer, the above optical model 1m is created, and by performing fitting calculations, the thickness t₂₀ and the thickness t₂₀ᵣ can be determined. Further, the thickness t₂₀ᵢ of the interface layer 20i, the thickness t_{20f} of the dense layer 20f, the volume ratio of the material of the electroconductive substrate 10 and the LDH included in the interface layer 20i, and the volume ratio of the LDH and air in the roughness layer 20r can be determined to predetermined ratios. This fitting calculation can be performed, for example, using predetermined software, such that the mean square error between the simulation data calculated from the optical model 1m and the measured data is 10° or less. For example, the fitting calculation may be performed using the New Amorphous model and the Tauc-Lorentz model as implemented by HORIBA Jobin Yvon, and the calculation result with the smaller mean square error may be adopted.

When the thickness t₂₀ᵢ is large, the anchor effect is likely to increase the bonding strength between the LDH layer 20 and the electroconductive substrate 10, and the electronic conductivity at the interface between the LDH layer 20 and the electroconductive substrate 10 is likely to be enhanced. Therefore, the water electrolysis electrode 1 is considered to exhibit high performance more easily. Furthermore, a high bonding strength between the LDH layer 20 and the electroconductive substrate 10 makes it less likely for the LDH layer 20 to peel off during gas evolution under high-temperature and alkaline conditions in water decomposition, whereby the water electrolysis electrode 1 is less likely to deteriorate. Consequently, the water electrolysis electrode 1 is likely to exhibit high durability. The thickness t₂₀ᵢ may be, for example, 50 nm or more, and may even be 60 nm or more. The thickness t₂₀ᵢ is, for example, 80 nm or less.

The dense layer 20f is considered to have the function of bonding the interface layer 20i and the roughness layer 20r. When the thickness t_{20f} is equal to or more than a predetermined value, the function of the thickness t_{20f} can be sufficiently exhibited. On the other hand, when the thickness t_{20f} is equal to or less than a predetermined value, the electronic conductivity in the LDH layer 20 may increase. From these viewpoints, the thickness t_{20f} is, for example, 111 nm or more, and may be 250 nm or more, or 490 nm or more. The thickness t_{20f} is, for example, less than 3000 nm, and may be less than 2000 nm, or 1830 nm or less.

The roughness layer 20r can provide a reaction field for gas evolution reactions. The roughness layer 20r can increase the surface area of the interface between the catalyst and the electrolyte contributing to the reaction per unit electrode area, thereby promoting gas evolution reactions. That is, use of the water electrolysis electrode 1 is likely to increase the gas evolution rate per unit electrode area.

The thickness t₂₀ is the sum of the thickness t₂₀ᵢ, the thickness t_{20f}, and the thickness t₂₀ᵣ. The thickness t₂₀ can be equal to or more than a predetermined value from the viewpoint of enabling the LDH layer 20 to function, and equal to or less than a predetermined value from the viewpoint of material diffusion and electronic conductivity. The thickness t₂₀ is, for example, 200 nm or more, and may be 400 nm or more, 500 nm or more, 600 nm or more, or 1000 nm or more. The thickness t₂₀ is, for example, less than 4000 nm, and may be less than 3000 nm, or less than 2000 nm. The proportion Pₜᵣ, when expressed as a percentage, is calculated as the product of 100 and the thickness t₂₀ᵣ divided by the thickness t₂₀. A larger proportion Pₜᵣ is likely to increase the gas evolution rate per unit electrode area, enabling the water electrolysis electrode 1 to exhibit high performance.

The proportion Pₜᵣ may be 7.3% or more, 17.7% or more, 39.4% or more, or 50.9% or more.

The upper limit of the proportion Pₜᵣ is not limited to a specific value. The proportion Pₜᵣ may be 99% or less, 95% or less, 90% or less, or 86.0% or less.

The electroconductive substrate 10 is not limited to a particular substrate as long as it has electrical conductivity. The electroconductive substrate 10 may include a metal, or it may include a resin. The entire conductive substrate 10 may be formed of a metal. The electroconductive substrate 10 may have a structure in which a surface layer including a metal is formed on a member of a resin such as polypropylene or polyethylene. In this case, the surface layer including the metal may be a plated film or a sputtered film. The metal included in the electroconductive substrate 10 may be a pure metal such as Ni and Fe, or an alloy such as stainless steel or Inconel. Inconel is a registered trademark.

The electroconductive substrate 10 includes, for example, Ni. In this case, the electroconductive substrate 10 is likely to have advantageous properties from the viewpoint of achieving both corrosion resistance and electrical conductivity in alkaline water electrolysis.

The electroconductive substrate 10 has a surface formed of Ni, for example. In this case, the electroconductive substrate 10 is likely to have high alkali resistance. In this case, the entire conductive substrate 10 may be formed of Ni, or the electroconductive substrate 10 may have a surface layer formed of Ni. The surface layer formed of Ni may be, for example, a sputtered film or a plated film.

In the case where the electroconductive substrate 10 has a surface formed of Ni, purity of the Ni forming the surface is not limited to a specific value. The purity may be, for example, 90 mass% or more. In this case, the electroconductive substrate 10 is more likely to have high alkali resistance. The method for determining the purity of the Ni forming the surface of the electroconductive substrate 10 is not limited to a specific method. The method for determining the purity of the Ni forming the surface of the electroconductive substrate 10 is not limited to a specific method. The purity may be determined by elemental analysis such as X-ray fluorescence spectroscopy (XRF) or energy-dispersive X-ray spectroscopy (EDX). The purity of the Ni forming the surface of the electroconductive substrate 10 may also be determined by analyzing an extract obtained by completely dissolving the electroconductive substrate 10 in aqua regia using a method such as inductively coupled plasma atomic emission spectroscopy (ICP-AES). In the case where the Ni purity is high, the purity of the Ni forming the surface of the electroconductive substrate 10 may be determined by comparing the specific gravity of the electroconductive substrate 10 with the specific gravity of pure Ni.

The purity of the Ni forming the surface of the electroconductive substrate 10 is desirably 95 mass% or more, more desirably, 97 mass% or more, further desirably 98 mass% or more, and particularly desirably 99 mass% or more.

The shape of the electroconductive substrate 10 is not limited particularly. The electroconductive substrate 10 has, for example, a sheet shape. The electroconductive substrate 10 may have a non-porous structure, such as a plate or a foil, or it may have a porous structure, such as expanded metal, a mesh, a foamed body, or a non-woven fabric. The electroconductive substrate 10 desirably has a porous structure. In this case, the surface area of the electroconductive part of the electroconductive substrate 10 is likely to increase, and the gas evolved during the water electrolysis reaction is likely to be diffused.

The thickness of the electroconductive substrate 10 is not limited to a specific value. The thickness of the electroconductive substrate 10 is, for example, 0.02 mm or more. In this case, the electroconductive substrate 10 can be handled easily. The thickness of the electroconductive substrate 10 is, for example, 10 mm or less, and desirably 1 mm or less.

The LDH layer 20, for example, covers the surface of the electroconductive substrate 10. A coverage of the LDH layer 20 with regard to the surface of the electroconductive substrate 10 is not limited to a specific value. The coverage is desirably 99% or more. In this case, the water electrolysis electrode 1 is likely to have high electrode activity. In addition, the water electrolysis electrode 1 is likely to have high durability.

The LDH layer 20 is, for example, bonded to the electroconductive substrate 10. For example, an adhesive layer or any other layer is not interposed between the LDH layer 20 and the electroconductive substrate 10, and the LDH layer 20 is directly bonded to the surface of the electroconductive substrate 10.

The near-infrared absorption characteristics of the LDH layer 20 can be quantitatively evaluated, for example, by spectroscopic ellipsometry. For example, when the extinction coefficient of the LDH layer 20 for near-infrared rays at a wavelength of 800 nm is higher, or in other words, when the absorption of near-infrared rays at a wavelength of 800 nm in the LDH layer 20 is greater, the water electrolysis electrode 1 is more likely to exhibit high performance. The extinction coefficient of the LDH layer 20 for near-infrared rays at a wavelength of 800 nm is, for example, 0.08 or more, and may be 0.1 or more, 0.2 or more, 0.3 or more, or 0.4 or more. High near-infrared absorption of the LDH layer 20 suggests high electrical conductivity of the LDH layer 20. When electrical conductivity of the LDH layer 20 is high, the water electrolysis electrode 1 may easily exhibit high performance.

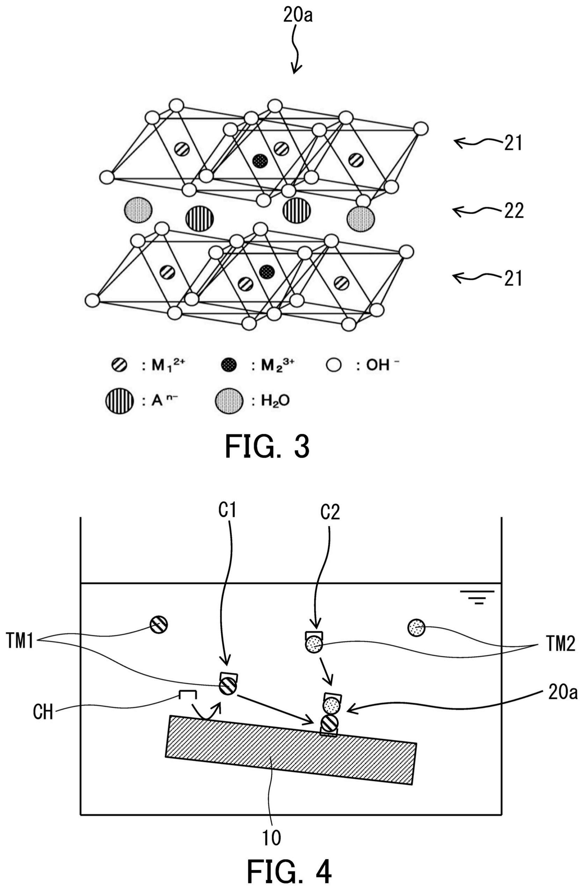

FIG. 3 is a diagram schematically showing an example of a crystal structure of the LDH. An LDH 20a included in the LDH layer 20 is active with regard to a reaction for evolving a gas such as hydrogen and oxygen, at the anode or cathode for water electrolysis. For example, the LDH 20a can transform into hydroxides in alkaline water electrolysis.

The LDH 20a has a composition represented, for example, by the following Formula (1). In Formula (1), M₁²⁺ is a divalent transition metal ion. M₂³⁺ is a trivalent transition metal ion. Aⁿ⁻ is an interlayer anion. x is a rational number that satisfies a requirement 0 < x < 1. y is a number that corresponds to the required amount of charge balance. n is an integer. And, m is a suitable rational number.

[M₁²⁺₁₋ₓM₂³⁺ₓ(OH)₂] [yAⁿ⁻•mH₂O] Formula (1)

The LDH 20a may include two or more transition metals, for example. The two or more transition metals in the LDH 20a are not limited to specific transition metals. The LDH 20a includes at least two selected from the group consisting of V, Cr, Mn, Fe, Co, Ni, Cu, W, and Ru, for example. In this case, the water electrolysis electrode 1 is likely to have high electrode activity.

The LDH 20a desirably includes at least one transition metal selected from the group consisting of Fe and Ni. In this case, the water electrolysis electrode 1 is more likely to have high electrode activity. In addition, the cost for manufacturing the water electrolysis electrode 1 is likely to be reduced.

The LDH 20a may include both Fe and Ni. For example, in the composition shown in Formula (1), M₁ may be Ni and M₂ may be Fe. In this case, the water electrolysis electrode 1 is more likely to exhibit high electrode activity.

In the LDH 20a, Aⁿ⁻ as an interlayer anion may be an inorganic ion or an organic ion. Examples of inorganic ions include CO₃²⁻, NO₃⁻, Cl⁻, SO₄²⁻, Br⁻, OH⁻, F⁻, I⁻, Si₂O₅²⁻, B₄O₅(OH)₄²⁻, and PO₄³⁻. Examples of organic ions include CH₃(CH₂)ₙSO⁴⁻, CH₃(CH₂)ₙCOO⁻, CH₃(CH₂)ₙPO⁴⁻, and CH₃(CH₂)ₙNO³⁻. Aⁿ⁻ can be inserted between layers of metal hydroxide together with water molecules. The charge and ion size of Aⁿ⁻are not limited to specific values. The LDH 20a may contain one kind of Aⁿ⁻ or may contain multiple kinds of Aⁿ⁻.

As shown in FIG. 3, the LDH 20a has an OH⁻ ion at each vertex of each octahedron centered on M₁²⁺ or M₂³⁺. The LDH 20a includes a metal hydroxide represented by [M₁²⁺₁₋ₓM₂³⁺ₓ(OH)₂]^{×+}. This metal hydroxide has a layered structure in which the octahedra of the hydroxide share edges and are linked in two dimensions. Between the layers of the metal hydroxide, the anions Aⁿ⁻ and water molecules are present. The layers of the metal hydroxide function as host layers 21, while a guest layer 22 containing anions Aⁿ⁻ and water molecules are arranged between the host layers. In other words, the LDH 20a as a whole has a sheet-like structure in which the host layers 21 of the metal hydroxide and the guest layer 22 of anions Aⁿ⁻ and water molecules are alternately stacked. The LDH 20a has a structure in which some amount of the M₁²⁺ contained in the metal hydroxide layer is replaced by M₂³⁺.

The LDH layer 20 may include a chelating agent. The chelating agent may coordinate with the transition metal ions included in the LDH 20a. This allows the LDH 20a to be stably present in the LDH layer 20. Furthermore, the LDH 20a may easily have a small particle diameter. In addition to that, the LDH layer 20, which can be a layer including the LDH 20a and being dense with few voids, is likely to have the desired thickness and likely to be firmly fixed to the electroconductive substrate 10, because the nucleated LDH 20a is likely to grow slowly as crystals in the case of forming the LDH layer 20 on the electroconductive substrate 10. This makes it easier for the LDH layer 20 to effectively contribute to the anodic reaction or the cathodic reaction, and the water electrolysis electrode 1 is more likely to have high electrode activity.

The chelating agent is not limited to a specific chelating agent. The chelating agent is, for example, an organic compound capable of coordinating with transition metal ions in LDH 20a. The chelating agent may be at least one selected from a group consisting of a bidentate organic ligand and a tridentate organic ligand. Examples of the chelating agents include β-diketones, β-keto esters, hydroxycarboxylic acids, and hydroxycarboxylates. Examples of the β-diketones include acetylacetone (ACAC), trifluoroacetylacetone, hexafluoroacetylacetone, benzoylaceton, tenoyl trifluoroacetone, dipivaloylmethane, dibenzoylmethane, and ascorbic acid. Examples of the β-keto esters include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acids and their salts include tartaric acid, citric acid, malic acid, gluconic acid, ferulic acid, lactic acid, glucuronic acid, and their salts.

The chelating agent desirably includes at least one selected from the group consisting of an acetylacetonate and a citrate. In this case, the water electrolysis electrode 1 is more likely to have high electrode activity. An example of the citrates is trisodium citrate.

The method for manufacturing the water electrolysis electrode 1 is not limited to a specific method. For example, the water electrolysis electrode 1 is manufactured by adjusting a solution with an electroconductive substrate 10 immersed therein to be alkaline, where the solution includes a chelating agent and two or more transition metal ions. According to this method, an LDH layer 20 including the LDH 20a and the chelating agent can be formed on the surface of the electroconductive substrate 10 in a simple manner.

The temperature of the solution when adjusting the solution to be alkaline is not limited to a specific temperature. For example, the temperature of the solution is 20°C ± 15°C. In this case, a water electrolysis electrode 1 having high electrode activity can be obtained easily.

The solvent of the solution may be water, an organic solvent, or a mixture of water and an organic solvent.

The method for manufacturing the water electrolysis electrode 1 desirably includes increasing the pH. This allows the LDH 20a to be formed on the surface of the electroconductive substrate 10 in a short period of time, whereby a water electrolysis electrode 1 having high electrode activity can be obtained easily. In addition, the thus manufactured water electrolysis electrode 1 is likely to have high durability.

The method of adjusting the solution to be alkaline is not limited to a specific method. For example, the solution may be adjusted to be alkaline by mixing the above-described solution with an alkaline solution. Alternatively, the solution may be adjusted to be alkaline by adding a pH booster to the solution. In this case, the pH booster is not limited to a specific compound. The pH booster is, for example, a compound having an epoxy group. Examples of the pH booster include propylene oxide, ethylene oxide, and butylene oxide. When a pH booster having an epoxy group such as propylene oxide is added to the solution, in the presence of a nucleophile such as a chloride ion, the pH booster can capture hydrogen ions present in the solution, following the ring-opening reaction of the epoxy group. As a result, the pH of the solution rises, and the solution can be alkaline. The pH of the solution including the chelating agent and two or more transition metal ions is 1, for example. When the pH booster is added to the solution, the pH of the solution rises gradually from 1, for example, and eventually the solution can be alkaline. The final pH of the solution is, for example, in a range of 8 to 12. Addition of the pH booster to the solution promotes the reaction in which hydrogen ions in the solution is captured. Thereby, the pH of the solution gradually rises. The time period from the addition of the pH booster to the solution until the pH of the solution reaches a steady state is not limited to a specific time period. That time period can be, for example, 24 hours or longer, or several days.

The two or more transition metal ions contained in the solution are not limited to specific transition metal ions. The two or more transition metal ions contained in the solution are, for example, ions of at least two transition metals selected from the group consisting of V, Cr, Mn, Fe, Co, Ni, Cu, W, and Ru. In this case, the water electrolysis electrode 1 having high electrode activity is more easily manufactured.

The two or more transition metal ions contained in the solution desirably include at least one transition metal ion selected from the group consisting of Ni and Fe. In this case, the water electrolysis electrode 1 having high electrode activity is more easily manufactured.

The electroconductive substrate 10 desirably includes Ni. The two or more transition metal ions contained in the solution desirably include Fe ions. The solution desirably contains chloride ions. In this case, the reaction indicated by Formula (2) can occur. Thereby, the electroconductive substrate 10 can be etched. The method for manufacturing the water electrolysis electrode 1 desirably includes promoting mixing of the solution before adjusting the solution to be alkaline in the state where the electroconductive substrate 10 is immersed in the solution. The promotion of mixing of the solution can be achieved, for example, by vibrating the electroconductive substrate 10, shaking the container in which the solution and the electroconductive substrate 10 are contained, or stirring the solution using a stirrer with a stirrer bar. With this method, a forced convection of the solution occurs, and mixing of the solution can be promoted. This allows the electroconductive substrate 10 to be etched in a desired state, and the LDH layer 20 can be formed in a desired state on the surface of the electroconductive substrate 10. As a result, the water electrolysis electrode 1 is likely to have high durability. The mixing of the solution may be promoted while the container containing the solution and the electroconductive substrate 10 is sealed, or the mixing may be promoted in an inert gas atmosphere.

4Ni²⁺Cl⁻₂ + 2Fe³⁺Cl⁻₃ + 2Ni → 5Ni²⁺Cl⁻₂ + 2Fe²⁺Cl⁻₂ + 1Ni Formula (2)

In manufacturing the water electrolysis electrode 1, the molar ratio of the content of Fe ion to the content of Ni included in the electroconductive substrate 10 is not limited to a specific value. For example, the molar ratio is 0.75 or less. In this case, it is possible to prevent the Ni included in the electroconductive substrate 10 from dissolving to make it difficult to manufacture the water electrolysis electrode 1, where the dissolution may be caused by the reaction shown by Formula (2).

The molar ratio is, for example, 0.03 or more. In this case, the LDH layer 20 can be easily formed uniformly on the electroconductive substrate 10, and the water electrolysis electrode 1 is more likely to have high electrode activity.

The chelating agent included in the solution may be selected with reference to the above examples of the chelating agents to be included in the LDH layer 20. The chelating agent included in the solution desirably includes at least one selected from the group consisting of acetylacetone and a citrate. This improves the dispersion stability of the complex in the solution and facilitates formation of the LDH layer 20 in the water electrolysis electrode 1 in the desired state. As a result, the water electrolysis electrode 1 is more likely to have high electrode activity.

FIG. 4 is a diagram schematically showing an example of a mechanism in manufacturing a water electrolysis electrode 1. As shown in FIG. 4, an electroconductive substrate 10 is immersed in a solution that includes a transition metal ion TM1, a transition metal ion TM2, and a chelating agent CH. For example, the transition metal ion TM1 is a Ni ion and the transition metal ion TM2 is an Fe ion. For example, Ni is present on the surface of the electroconductive substrate 10. Some amount of the transition metal ion TM2 allows the Ni present on the surface of the electroconductive substrate 10 to be eluted by etching. Some amount of the chelating agent reacts with the surface of the electroconductive substrate 10, and a complex C1 is formed from the transition metal ion TM1 derived from the electroconductive substrate 10 and the chelating agent CH. In addition, when the solution is adjusted to be alkaline, a complex C1 of the transition metal ion TM1 derived from the solution and the chelating agent CH is formed, and a complex C2 of the transition metal ion TM2 and the chelating agent CH is formed in the solution. Next, the complex C1 reacts with the complex C2 on the surface of the electroconductive substrate 10, whereby the LDH 20a is synthesized to coat the surface of the electroconductive substrate 10. Furthermore, since the complex C1 and the complex C2 include the chelating agent CH, the crystal growth of the LDH 20a is inhibited. As a result, an LDH layer 20 including the LDH 20a and the chelating agent CH is formed on the surface of the electroconductive substrate 10, whereby a water electrolysis electrode 1 is obtained.

The water electrolysis electrode 1 according to the present embodiment can be used, for example, as an electrode for a water electrolysis cell in an alkaline water electrolysis device or an anion-exchange membrane type water electrolysis device. The water electrolysis electrode 1 is used, for example, in at least one selected from the group consisting of the anode and the cathode in any of the water electrolysis devices. In other words, at least one selected from the group consisting of a water electrolysis anode including the water electrolysis electrode 1 and a water electrolysis cathode including the water electrolysis electrode 1 can be provided. Thereby, the activity of the anodic reaction or the cathodic reaction in a water electrolysis is likely to increase.

### (Second embodiment)

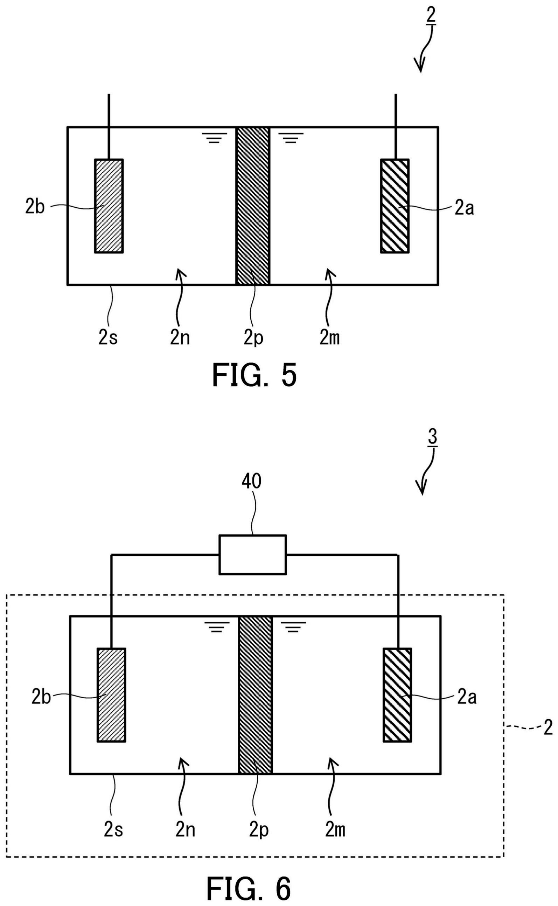

FIG. 5 is a cross-sectional view schematically showing an example of a water electrolysis cell according to a second embodiment. As shown in FIG. 5, a water electrolysis cell 2 includes an anode 2a, a cathode 2b, and a separator 2p. At least one selected from the group consisting of the anode 2a and the cathode 2b includes, for example, the water electrolysis electrode 1 according to the first embodiment. In this case, the activity of the anodic reaction or the cathodic reaction in the water electrolysis cell is likely to increase, and the anode 2a or the cathode 2b can easily exhibit high performance.

The water electrolysis cell 2 is, for example, an alkaline water electrolysis cell for which an alkaline aqueous solution is used. The alkaline aqueous solution used in the water electrolysis cell 2 is not limited to a specific alkaline aqueous solution. Examples of the alkaline aqueous solution include a potassium hydroxide aqueous solution and a sodium hydroxide aqueous solution.

As shown in FIG. 5, the water electrolysis cell 2, for example, includes an electrolysis tank 2s, a first chamber 2m, and a second chamber 2n. The separator 2p is disposed inside the electrolysis tank 2s and separates the interior of the electrolysis tank 2s into the first chamber 2m and the second chamber 2n. The anode 2a is disposed in the first chamber 2m, and the cathode 2b is disposed in the second chamber 2n.

The separator 2p is, for example, a separator for alkaline water electrolysis. The separator 2p is, for example, a sheet-shaped porous membrane. The separator 2p has a thickness, for example, in a range of 100 µm to 500 µm and has pores that serve as a passage for ions or an electrolytic solution. Materials for the separator 2p are not limited to a specific material. Examples of the material for the separator 2p include asbestos, polymer-reinforced asbestos, potassium titanate bonded with polytetrafluoroethylene (PTFE), zirconia bonded with PTFE, and antimonic acid and antimony oxide bonded with polysulfone. Other examples of materials for the separator 2p include sintered nickel, nickel coated with ceramics and nickel oxide, and polysulfone. The separator 2p may be Zirfon Perl UTP 500 manufactured by Agfa-Gevaert Group.

The anode 2a may be arranged in a state of zero gap, namely, in a state where the anode 2a is in contact with the separator 2p, or the anode 2a may be arranged in a state in which there is a gap between the anode 2a and the separator 2p. The cathode 2b may be arranged in a state being in contact with the separator 2p, or the cathode 2b may be arranged in a state in which there is a gap between the cathode 2b and the separator 2p.

The water electrolysis cell 2 electrolyzes an alkaline aqueous solution to produce hydrogen and oxygen. An aqueous solution including a hydroxide of an alkali metal or alkaline earth metal is supplied to the first chamber 2m. In addition, an alkaline aqueous solution may be supplied to the second chamber 2n. Electrolysis is carried out while an alkaline aqueous solution of a predetermined concentration is discharged from the first chamber 2m and the second chamber 2n, whereby hydrogen and oxygen are produced.

In the case where the anode 2a includes the water electrolysis electrode 1, the cathode 2b may include, for example, an electrode material known as a cathode for an alkaline water electrolysis cell. In the case where the cathode 2b includes the water electrolysis electrode 1, the anode 2a may include the electrode material known as the anode for the alkaline water electrolysis cell. In the water electrolysis cell 2, both the anode 2a and the cathode 2b may include the water electrolysis electrode 1.

With the above configuration, at least one selected from the group consisting of the anode 2a and the cathode 2b includes the water electrolysis electrode 1, and thus, the water electrolysis cell 2 can exhibit high performance.

### (Third embodiment)

FIG. 6 is a cross-sectional view schematically showing an example of a water electrolysis device according to a third embodiment. As shown in FIG. 6, a water electrolysis device 3 includes the water electrolysis cell 2 according to the second embodiment and a voltage applying unit 40. The voltage applying unit 40 applies a voltage between the cathode 2b and the anode 2a. The water electrolysis device 3 is an alkaline water electrolysis device in which an alkaline aqueous solution is used.

The voltage applying unit 40 is electrically connected to the anode 2a and the cathode 2b. The voltage applying unit 40 causes the potential of the anode 2a to become higher than the potential of the cathode 2b. The voltage applying unit 40 is not limited to a specific type of voltage applying unit as long as the voltage applying unit 40 is capable of applying a voltage between the anode 2a and the cathode 2b. The voltage applying unit 40 may be a device to adjust the voltage applied between the anode 2a and the cathode 2b. In the case where the voltage applying unit 40 is connected to a direct current power source such as a battery, a solar cell and a fuel cell, the voltage applying unit 40 includes a DC/DC converter, for example. In the case where the voltage applying unit 40 is connected to an alternating current power source such as a commercial power source, the voltage applying unit 40 is equipped with an AC/DC converter, for example. The voltage applying unit 40 may be an electric power type power source, for example. In the electric power type power source, the voltage to be applied between the anode 2a and the cathode 2b, and the current to flow between the anode 2a and the cathode 2b, are adjusted such that the electric power supplied to the water electrolysis device 3 will be a predetermined set value.

With the above configuration, the water electrolysis device 3 can exhibit high performance.

### (Fourth embodiment)

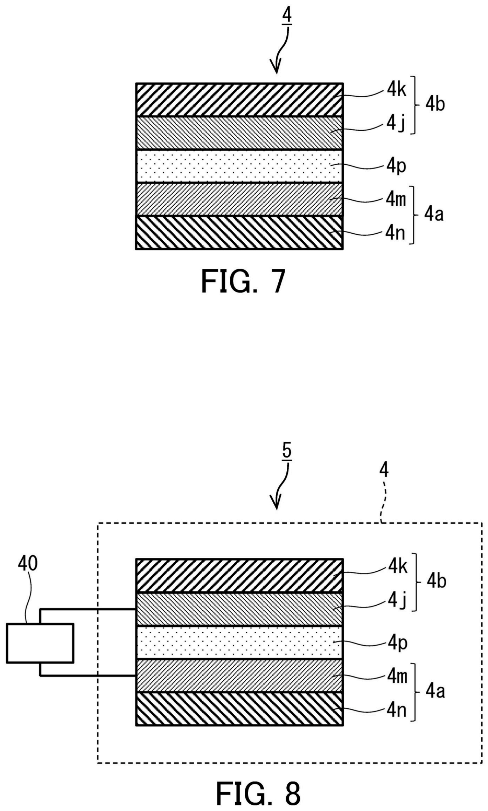

FIG. 7 is a cross-sectional view schematically showing an example of a water electrolysis cell according to a fourth embodiment. As shown in FIG. 7, a water electrolysis cell 4 includes an anode 4a, a cathode 4b, and an anion-exchange membrane 4p. In the water electrolysis cell 4, at least one selected from the group consisting of the anode 4a and the cathode 4b includes, for example, the water electrolysis electrode 1 according to the first embodiment. In this case, the activity of the anodic reaction or the activity of the cathodic reaction in the water electrolysis cell 4 is likely to increase, and the anode 4a or the cathode 4b is likely to exhibit high performance.

The water electrolysis cell 4 is, for example, an anion-exchange membrane (AEM) type water electrolysis cell. As shown in FIG. 7, the anode 4a includes, for example, an electrode catalyst layer 4m and a gas diffusion layer 4n. The cathode 4b includes, for example, an electrode catalyst layer 4j and a gas diffusion layer 4k. The electrode catalyst layer 4m of the anode 4a is in contact with one of the main surfaces of the anion-exchange membrane 4p, and the electrode catalyst layer 4j of the cathode 4b is in contact with the other main surface of the anion-exchange membrane 4p.

The anion-exchange membrane 4p is not limited to a specific type of anion-exchange membrane. The anion-exchange membrane 4p has conductivity for anions such as hydroxide ions. The anion-exchange membrane 4p is capable of preventing mixing of the oxygen gas evolved at the anode 4a with the hydrogen gas evolved at the cathode 4b. The oxygen gas passes through the gas diffusion layer 4n and is led outside the anode 4a. The hydrogen gas passes through the gas diffusion layer 4k and is led outside the cathode 4b.

In the water electrolysis cell 4, in the case where the anode 4a includes the water electrolysis electrode 1, the cathode may be a known cathode in an AEM-type water electrolysis cell. In the water electrolysis cell 4, in the case where the cathode 4b includes the water electrolysis electrode 1, the anode 4a may be a known anode in an AEM-type water electrolysis cell. In the water electrolysis cell 4, both the anode 4a and the cathode 4b may include the water electrolysis electrode 1.

With the above configuration, at least one selected from the group consisting of the anode 4a and the cathode 4b includes the water electrolysis electrode 1, whereby the water electrolysis cell 4 can exhibit high performance.

### (Fifth embodiment)

FIG. 8 is a cross-sectional view schematically showing an example of a water electrolysis device according to a fifth embodiment. As shown in FIG. 8, a water electrolysis device 5 includes a water electrolysis cell 4 and a voltage applying unit 40. The voltage applying unit 40 applies a voltage between a cathode 4b and an anode 4a. The water electrolysis device 5 is, for example, an AEM-type water electrolysis device.

The voltage applying unit 40 is electrically connected to the anode 4a and to the cathode 4b. Due to the voltage applying unit 40, the potential of the anode 4a becomes higher than the potential of the cathode 4b. The voltage applying unit 40 is not limited to a specific type of voltage applying unit as long as the voltage applying unit 40 is capable of applying voltage between the anode 4a and the cathode 4b. The voltage applying unit 40 may be a unit to adjust voltage applied between the anode 4a and the cathode 4b. In the case where the voltage applying unit 40 is connected to a direct current power source such as a battery, solar cell, or fuel cell, the voltage applying unit 40 includes, for example, a DC/DC converter. In the case where the voltage applying unit 40 is connected to an alternating current power source such as a commercial power source, the voltage applying unit 40 includes, for example, an AC/DC converter. The voltage applying unit 40 may be, for example, an electric power type power source. In the electric power type power source, the voltage applied between the anode 4a and the cathode 4b and the current flowing between the anode 4a and the cathode 4b are adjusted such that the power supplied to the water electrolysis device 5 becomes a predetermined set value.

With the above configuration, the water electrolysis device 5 can exhibit high performance.

### (Appendix)

The following techniques are disclosed based on the above description.

### (Technique 1)

A water electrolysis electrode, including:
an electroconductive substrate; and
a layered double hydroxide layer disposed on a surface of the electroconductive substrate, wherein
the layered double hydroxide layer includes a roughness layer, and
a proportion of a thickness of the roughness layer to a thickness of the layered double hydroxide layer is 4.8% or more.

### (Technique 2)

The water electrolysis electrode according to Technique 1, wherein
the proportion is 7.3% or more.

### (Technique 3)

The water electrolysis electrode according to Technique 2, wherein
the proportion is 17.7% or more.

### (Technique 4)

The water electrolysis electrode according to Technique 3, wherein
the proportion is 39.4% or more.

### (Technique 5)

The water electrolysis electrode according to Technique 4, wherein
the proportion is 50.9% or more.

### (Technique 6)

The water electrolysis electrode according to any one of Techniques 1 to 5, wherein
the layered double hydroxide layer includes at least two transition metals selected from the group consisting of V, Cr, Mn, Fe, Co, Ni, Cu, W, and Ru.

### (Technique 7)

The water electrolysis electrode according to Technique 6, wherein
the layered double hydroxide layer includes at least one transition metal selected from the group consisting of Fe and Ni.

### (Technique 8)

The water electrolysis electrode according to Technique 7, wherein
the layered double hydroxide layer includes a chelating agent.

### (Technique 9)

The water electrolysis electrode according to Technique 8, wherein
the chelating agent includes at least one selected from the group consisting of acetylacetone and a citrate.

### (Technique 10)

A water electrolysis anode including the water electrolysis electrode according to any one of Techniques 1 to 9.

### (Technique 11)

A water electrolysis cathode including the water electrolysis electrode according to any one of Techniques 1 to 9.

### (Technique 12)

A water electrolysis cell including:
an anode;
a cathode; and
a separator, wherein
at least one selected from the group consisting of the following conditions is satisfied:
   the anode is the water electrolysis anode according to Technique 10; and
   the cathode is the water electrolysis cathode according to Technique 11.

### (Technique 13)

A water electrolysis cell including:
an anode;
a cathode; and
an anion-exchange membrane, wherein
at least one selected from the group consisting of the following conditions is satisfied:
   the anode is the water electrolysis anode according to Technique 10; and
   the cathode is the water electrolysis cathode according to Technique 11.

### (Technique 14)

A water electrolysis device including:
the water electrolysis cell according to Technique 12 or 13; and
a voltage applying unit configured to apply voltage between the cathode and the anode.

### EXAMPLES

The present disclosure is further explained in detail by referring to Examples. The following Examples demonstrate a part of the present disclosure, and the present disclosure is not limited to the Examples.

### (Example 1)

Into a perfluoroalkoxy alkane (PFA) mini-vial OD-98-5MV manufactured by TAIYO COMPANY CO., LTD., 3.64 milliliters (mL) of water was introduced, in which 0.151 g of nickel chloride hexahydrate and 0.043 g of iron chloride hexahydrate were dissolved to prepare a solution. The nickel chloride hexahydrate and the iron chloride hexahydrate were products purchased from FUJIFILM Wako Pure Chemical Corporation. To this solution, 0.025 mL of acetylacetonate (ACAC) as a chelating agent was added, whereby a chelating agent solution according to Example 1 was obtained. The ACAC was a product purchased from Sigma-Aldrich Corporation.

One Ni plate supplied by Nilaco Corporation was washed with acetone for 10 minutes and washed with a 1M HCl aqueous solution for 10 minutes to degrease the Ni plate and remove impurities from the Ni plate. The Ni plate had a thickness of 0.2 mm and had a circular shape with a diameter of 15 mm in a plan view. The weight of the Ni plate was 0.315 g. Next, the Ni plate was washed with water to complete the washing treatment of the Ni plate.

Next, the thus washed Ni plate was immersed in the above-described chelating agent solution according to Example 1. In this state, the chelating agent solution with the Ni plate was shaken and stirred at 25°C for 24 hours. At this time, the outermost surface of the Ni plate was etched according to Formula (2) above. Next, 0.254 mL of propylene oxide (POX) as a pH booster was added to the chelating agent solution. The resulting mixed solution was shaken and stirred at 25°C for 72 hours. After 72 hours of shaking and stirring, the Ni plate was collected, washed with water, and dried. In this manner, the electrode according to Example 1 was obtained.

### (Example 2)

An electrode according to Example 2 was prepared in the same manner as in Example 1, except for the following points. In a PFA mini-vial of OD-98-5MV, 1.50 mL of water and 2.25 mL of ethanol were mixed to prepare a mixed solvent. The ethanol was a product purchased from FUJIFILM Wako Pure Chemical Corporation. In the mixed solvent, 0.128 g of nickel chloride hexahydrate and 0.073 g of iron chloride hexahydrate were dissolved to prepare a solution. To this solution, 0.0253 mL of ACAC as a chelating agent was added to obtain a chelating agent solution according to Example 2. An electrode according to Example 2 was obtained in the same manner as in Example 1, except that the chelating agent solution according to Example 2 was used in place of the chelating agent solution according to Example 1, and that 0.136 mL of POX as a pH booster was added to the chelating agent solution.

### (Example 3)

An electrode according to Example 3 was prepared in the same manner as in Example 1, except for the following points. In a PFA mini-vial of OD-98-5MV, 1.45 mL of water and 2.17 mL of ethanol were mixed to prepare a mixed solvent. The ethanol was a product purchased from FUJIFILM Wako Pure Chemical Corporation. In the mixed solvent, 0.123 g of nickel chloride hexahydrate and 0.070 g of iron chloride hexahydrate were dissolved to prepare a solution. To this solution, 0.0365 mL of ACAC as a chelating agent was added to obtain a chelating agent solution according to Example 3. An electrode according to Example 3 was obtained in the same manner as in Example 1, except that the chelating agent solution according to Example 3 was used in place of the chelating agent solution according to Example 1, and that 0.263 mL of POX as a pH booster was added to the chelating agent solution.

### (Example 4)

An electrode according to Example 4 was prepared in the same manner as in Example 1, except for the following points. In a PFA mini-vial of OD-98-5MV, 1.45 mL of water and 2.18 mL of ethanol were mixed to prepare a mixed solvent. The ethanol was a product purchased from FUJIFILM Wako Pure Chemical Corporation. In the mixed solvent, 0.123 g of nickel chloride hexahydrate and 0.070 g of iron chloride hexahydrate were dissolved to prepare a solution. To this solution, 0.0200 mL of ACAC as a chelating agent was added to obtain a chelating agent solution according to Example 4. An electrode according to Example 4 was obtained in the same manner as in Example 1, except that the chelating agent solution according to Example 4 was used in place of the chelating agent solution according to Example 1, and that 0.260 mL of POX as a pH booster was added to the chelating agent solution.

### (Example 5)

An electrode according to Example 5 was manufactured in the same manner as in Example 1, except for the following points. In a PFA mini-vial of OD-98-5MV, 1.46 mL of water and 2.19 mL of ethanol were mixed to prepare a mixed solvent. The ethanol was a product purchased from FUJIFILM Wako Pure Chemical Corporation. In the mixed solvent, 0.124 g of nickel chloride hexahydrate and 0.070 g of iron chloride hexahydrate were dissolved to prepare a solution. To this solution, 0.0061 mL of ACAC as a chelating agent was added to obtain a chelating agent solution according to Example 5. An electrode according to Example 5 was obtained in the same manner as in Example 1, except that the chelating agent solution according to Example 5 was used in place of the chelating agent solution according to Example 1, and that 0.265 mL of POX as a pH booster was added to the chelating agent solution.

### (Example 6)

An electrode according to Example 6 was manufactured in the same manner as in Example 1, except for the following points. Into a PFA mini-vial OD-98-5MV, 3.64 mL of water was introduced. In this water, 0.124 g of nickel chloride hexahydrate and 0.07 g of iron chloride hexahydrate were dissolved to prepare a solution. To this solution, 0.0123 mL of ACAC as a chelating agent was added to obtain the chelating agent solution according to Example 6. An electrode according to Example 6 was obtained in the same manner as in Example 1 except that the chelating agent solution according to Example 6 was used in place of the chelating agent solution according to Example 1, and that 0.265 mL of POX as a pH booster was added to the chelating agent solution.

### (Comparative Example 1)

An electrode according to Comparative Example 1 was prepared in the same manner as in Example 1, except for the following points. In 3.32 mL of water in a PFA mini vial OD-98-5MV, 0.226 g of nickel chloride hexahydrate and 0.128 g of iron chloride hexahydrate were dissolved to prepare a solution. To this solution, 0.0400 mL of ACAC as a chelating agent was added to obtain the chelating agent solution according to Comparative Example 1. An electrode according to Comparative Example 1 was obtained in the same manner as in Example 1 except that the chelating agent solution according to Comparative Example 1 was used in place of the chelating agent solution according to Example 1, and that 0.480 mL of POX as a pH booster was added to the chelating agent solution.

### [Evaluation of LDH layer thickness]

Measurement was performed at a single point in the center of each electrode using a spectroscopic ellipsometer UVISEL2 manufactured by HORIBA, Ltd. under the following conditions: an incident angle of 70 degrees, a measurement wavelength range of 0.6 to 5.5 eV, and a spot diameter of 1 mm × 2 mm. The measurement data was analyzed using software Delta Psi2 included in the spectroscopic ellipsometer UVISEL2 and using an optical model as shown in FIG. 2, thereby determining the thicknesses of the LDH layer, the interface layer, the dense layer and the roughness layer. For the fitting calculations in this analysis, the Tauc-Lorentz model and the New Amorphous model proposed by HORIBA Jobin Yvon were used, and the result yielding the smaller mean square error between the simulation data calculated from the optical model and the measured data was adopted. Furthermore, the fitting calculations were performed such that the mean square error was 10° or less.

### [Evaluation of current density and electrode overpotential]

Current densities in the oxygen evolution reaction (OER) of the electrodes according to each Example and Comparative Example 1 were evaluated. The following equipment was used for the measurement: a potentiostat VersaSTAT4 manufactured by Princeton Applied Research; an alkali sample vial (200 ml) manufactured by BAS Inc.; a Teflon (registered trademark) cap (200 ml) manufactured by BAS Inc.; and a plate electrode AE-2 manufactured by EC FRONTIER CO., LTD., as a working electrode jig. The electrodes as working electrodes according to each Example and Comparative Example were fixed to the jig. As the counter electrode, a double platinum wire counter electrode (D.6.0305.200J) manufactured by Metrohm AG was used. The current originating from the anodic reaction of the water electrolysis cell was measured using the three-electrode method under the following measurement conditions. The anodic reaction is an oxygen evolution reaction.

### (Measurement conditions)

Solution: 1M KOH solution
Potential to reversible hydrogen electrode (RHE): 1.0 V to 1.7 V
Number of cycles: 5 cycles
Rate of potential sweep: 10 mV/sec
Temperature: 25°C

The overpotential was determined by subtracting a theoretical potential of 1.229 V from the voltage corresponding to the current density of 10 mA/cm² in the fifth cycle, the theoretical potential of 1.229 V being required to drive the oxygen evolution reaction. The current density was determined by dividing the current value corresponding to the voltage of 1.6 V in the fifth cycle by the area of 1.767 cm² of the Ni plate electrode in a plan view.

Table 1 shows the proportion of the thickness of the roughness layer to the thickness of the LDH layer of the electrode, the roughness layer thickness, the dense layer thickness, the interface layer thickness, the LDH layer thickness, the current density, and overpotential for each Example and Comparative Example. Although the overpotential for each Example and Comparative Example 1 are similar, the current density for each Example is larger than that for Comparative Example 1. As to the electrode in each Example, the proportion of the thickness of the roughness layer to the thickness of the LDH layer is larger in comparison with the counterpart of Comparative Example 1. This result indicates that a water electrolysis electrode equipped with an LDH layer including the LDH can exhibit high performance when the proportion of the thickness of the roughness layer to the thickness of the LDH layer is 4.8% or more.

**[Table 1]**

| | Example 1 | Example 2 | Example 3 | Example 4 | Example 5 | Example 6 | Comparative Example 1 |
|---|---|---|---|---|---|---|---|
| Proportion of roughness layer thickness to LDH layer thickness [%] | 58.9 | 50.8 | 39.3 | 17.6 | 7.26 | 86.0 | 4.74 |
| Roughness layer thickness [nm] | 244.8 | 334.8 | 201.6 | 115.7 | 149.5 | 1536 | 54.6 |
| Dense layer thickness [nm] | 111.8 | 260.1 | 250.4 | 490.5 | 1830 | 185 | 1017 |
| Interface layer thickness [nm] | 58.8 | 63.6 | 60.9 | 50.4 | 80 | 65 | 80 |
| LDH layer thickness [nm] | 415.4 | 658.5 | 512.9 | 656.6 | 2060 | 1786 | 1152 |
| Overpotential [mV] | 236 | 235 | 238 | 236 | 230 | 224 | 235 |
| Current density [mA/cm²] | 109.2 | 102.9 | 98.9 | 96.5 | 95.8 | 107.3 | 90.7 |

Many modifications and other embodiments of the present disclosure will be apparent to those skilled in the art with reference to the above description. Therefore, the above description should be interpreted only as an example, and is provided for the purpose of teaching those skilled in the art the best manner to carry out the present disclosure. The operating conditions, the composition, the structure and/or the function can be substantially modified without departing from the spirit of the present disclosure.

### INDUSTRIAL APPLICABILITY

A water electrolysis electrode of the present disclosure can be used as an anode or a cathode for water electrolysis.

## Claims

1. A water electrolysis electrode, comprising:
an electroconductive substrate; and
a layered double hydroxide layer disposed on a surface of the electroconductive substrate, wherein
the layered double hydroxide layer comprises a roughness layer, and
a proportion of a thickness of the roughness layer to a thickness of the layered double hydroxide layer is 4.8% or more.

2. The water electrolysis electrode according to claim 1, wherein
the proportion is 7.3% or more.

3. The water electrolysis electrode according to claim 2, wherein
the proportion is 17.7% or more.

4. The water electrolysis electrode according to claim 3, wherein
the proportion is 39.4% or more.

5. The water electrolysis electrode according to claim 4, wherein
the proportion is 50.9% or more.

6. The water electrolysis electrode according to any one of claims 1 to 5, wherein
the layered double hydroxide layer comprises at least two transition metals selected from the group consisting of V, Cr, Mn, Fe, Co, Ni, Cu, W, and Ru.

7. The water electrolysis electrode according to claim 6, wherein
the layered double hydroxide layer comprises at least one transition metal selected from the group consisting of Fe and Ni.

8. The water electrolysis electrode according to any one of claims 1 to 7, wherein
the layered double hydroxide layer comprises a chelating agent.

9. The water electrolysis electrode according to claim 8, wherein
the chelating agent comprises at least one selected from the group consisting of acetylacetone and a citrate.

10. A water electrolysis anode comprising the water electrolysis electrode according to any one of claims 1 to 9.

11. A water electrolysis cathode comprising the water electrolysis electrode according to any one of claims 1 to 9.

12. A water electrolysis cell comprising:
an anode;
a cathode; and
a separator, wherein
at least one selected from the group consisting of the following conditions is satisfied:
the anode is the water electrolysis anode according to claim 10; and
the cathode is the water electrolysis cathode according to claim 11.

13. A water electrolysis cell comprising:
an anode;
a cathode; and
an anion-exchange membrane, wherein
at least one selected from the group consisting of the following conditions is satisfied:
the anode is the water electrolysis anode according to claim 10; and
the cathode is the water electrolysis cathode according to claim 11.

14. A water electrolysis device comprising:
the water electrolysis cell according to claim 12 or 13; and
a voltage applying unit configured to apply voltage between the cathode and the anode.
